# FASCICULE DE BREVET EUROPEEN

(11) **EP 3 583 311 B1**
(45) Date de publication et mention de la délivrance du brevet: **16.11.2022**
(21) Numéro de dépôt: 18704271.8
(22) Date de dépôt: 16.01.2018
(51) Int. Cl.: F02P 5/15, F02N 11/08

(54) **PROCÉDÉ DE CONTRÔLE DE L'AVANCE À L'ALLUMAGE MINIMALE D'UN MOTEUR THERMIQUE AU COURS DE SA MISE EN ROUTE**
VERFAHREN ZUR STEUERUNG DER MINIMALEN ZÜNDVORVERSTELLUNG EINER BRENNKRAFTMASCHINE WÄHREND IHRER STARTPHASE
METHOD FOR CONTROLLING THE MINIMUM IGNITION ADVANCE OF A COMBUSTION ENGINE DURING ITS START-UP

(30) Priorité: 17.02.2017 FR 1751276; 17.02.2017 FR 1751275
(43) Date de publication de la demande: 25.12.2019
(73) Titulaire: PSA Automobiles SA, 78300 Poissy (FR)
(72) Inventeur: SOUQUET, Romain, 75017 Paris (FR); GRALL, Sebastien, 94000 Créteil (FR); GALLIENNE, Felix, 92250 La Garenne Colombes (FR)
(86) Numéro de dépôt international: PCT/FR2018/050096
(87) Numéro de publication internationale: WO 2018/150112

(56) Documents cités:
- EP-A2- 1 342 898
- EP-A2- 2 213 870
- WO-A1-2016/156699
- DE-A1- 19 939 821
- US-A- 4 177 776
- US-A1- 2008 154 485
- US-A1- 2009 199 817
- US-A1- 2011 239 988

## Description

La présente invention se rapporte au domaine des moteurs thermiques à allumage commandé. L'invention concerne plus particulièrement un procédé de contrôle du moteur thermique lors de sa mise en route.

Il est connu pour réduire la consommation et les émissions de polluants des moteurs thermiques des véhicules automobiles d'utiliser un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continuerait malgré tout sans ce système de fonctionner au ralenti, puis opérant le redémarrage automatique du moteur lorsque le conducteur souhaite faire repartir son véhicule.

Par ailleurs, il est connu que le conducteur d'un véhicule automobile effectue un premier démarrage, ou démarrage initial, lorsqu'il démarre le moteur thermique de son véhicule, par exemple à l'aide d'une clef de contact ou d'un bouton de démarrage. Ce mode de démarrage a pour effet de réveiller le calculateur de contrôle moteur qui ensuite se charge de gérer ce premier démarrage. On distingue ainsi ce premier démarrage des redémarrages automatiques suivants, car lors d'un redémarrage du moteur, le calculateur est réveillé tandis que le moteur est arrêté, ce qui permet par exemple un redémarrage alors que le conducteur ne l'a pas demandé, ou suite à une demande du conducteur par appui sur la pédale d'accélérateur).

Pour des raisons d'agrément de conduite, il est connu, par exemple du document US2015247482 de contrôler l'avance à l'allumage appliqué au moteur au cours d'un redémarrage. On connait encore le document DE19939821A1, correspondant au préambule de la revendication 1.

Toujours pour des raisons de maîtrise de la qualité du (re)démarrage et donc de l'agrément de conduite, lorsque le moteur thermique effectue son premier démarrage ou un redémarrage automatique, il est souhaitable de piloter le moteur de sorte à contrôler lors des premières combustions, une situation de dépassement de régime de ralenti moteur, couramment désigné surrégime ou sous l'anglicisme " overshoot ").

Par conséquent, le problème à la base de l'invention est de gérer cette situation de dépassement de régime de ralenti moteur lors d'un premier démarrage ou d'un redémarrage automatique.

Pour résoudre ce problème, il est prévu selon l'invention un procédé de contrôle d'un moteur thermique à allumage commandé de véhicule moteur comprenant un système d'arrêt et de redémarrage automatique dans lequel on applique une avance à l'allumage effective au cours d'une mise en route du moteur thermique, cette mise en route comportant une phase de mise en rotation assistée du moteur thermique directement suivie d'une phase de fonctionnement autonome du moteur,
procédé dans lequel, lorsque la mise en route du moteur thermique est un redémarrage automatique, pendant la phase de mise en rotation assistée du moteur, l'avance à l'allumage effective est bornée par une avance à l'allumage minimum correspondant à un premier seuil prédéterminé,
puis, lorsque débute la phase de fonctionnement autonome, cette avance à l'allumage minimum évolue du premier seuil minimum prédéterminé vers une avance minimale de combustion en deçà de laquelle la combustion est considérée instable et l'avance à l'allumage effective converge vers une consigne d'avance à l'allumage limitée par cette avance à l'allumage minimum,
caractérisé en ce que le premier seuil prédéterminé est inférieur à l'avance minimale de combustion.

L'effet technique est ainsi de pouvoir maîtriser le surrégime du début de la phase de fonctionnement autonome, avant d'accoster le régime de ralenti.

Diverses caractéristiques supplémentaires peuvent être prévues, seules ou en combinaisons :
En variante, l'avance à l'allumage minimum évolue directement du premier seuil minimum prédéterminé vers l'avance minimale combustion, dès l'entrée de la phase de fonctionnement autonome.

En variante, lorsque la mise en route est un démarrage initial du moteur thermique, pendant la phase de mise en rotation assistée du moteur, l'avance à l'allumage effective est bornée par une avance à l'allumage minimum correspondant à un second seuil prédéterminé, différent du premier seuil prédéterminé,
puis, lorsque débute la phase de fonctionnement autonome, cette avance à l'allumage minimum évolue du second seuil minimum prédéterminé vers l'avance minimale combustion, et l'avance à l'allumage effective converge vers la consigne d'avance à l'allumage limitée par l'avance à l'allumage minimum.

En variante, l'avance à l'allumage minimum évolue progressivement entre le premier seuil prédéterminé et l'avance minimale de combustion par une pente calibrable.

En variante, lorsque débute la phase de fonctionnement autonome, l'avance à l'allumage effective converge vers la consigne d'avance à l'allumage limitée par l'avance à l'allumage minimum selon une pente initiale choisi de sorte que l'avance à l'allumage effective atteigne l'avance à l'allumage minimum lorsque cette dernière est comprise entre le premier seuil prédéterminé et l'avance minimale de combustion afin d'obtenir une évolution de l'avance à l'allumage effective en double pente.

En variante, l'avance minimale de combustion est inférieure au second seuil prédéterminé.

L'invention a aussi pour objet un calculateur, caractérisé en ce qu'il comprend les moyens d'acquisition, de traitement par instructions logicielles stockées dans une mémoire ainsi que les moyens de commande requis à mise en oeuvre d'un procédé selon l'une quelconque des variantes précédemment décrites.

L'invention a aussi pour objet un moteur thermique à allumage commandé, caractérisé en ce qu'il comprend un tel calculateur.

L'invention a aussi pour objet un véhicule automobile, caractérisé en ce qu'il comprend un tel moteur thermique à allumage commandé pour son déplacement.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'une gestion des avances à l'allumage sur un redémarrage automatique selon l'invention.
- La figure 2 est une représentation schématique d'une gestion des avances à l'allumage sur un premier démarrage selon l'invention.

Dans la suite de ce document L'avance à l'allumage est définie par l'angle de rotation vilebrequin qui sépare l'instant d'étincelle du PMH (point mort haut) du moteur thermique.

Un allumage au PMH signifie une avance à l'allumage nulle. Un décalage du point d'allumage après le PMH correspond une valeur négative d'avance à l'allumage. Par exemple une avance de -10 DV (Degré Vilebrequin) signifie un allumage 10 DV après le PMH.

L'invention s'applique à un véhicule comportant un moteur à combustion interne à allumage commandé, par exemple un moteur fonctionnant à l'essence, au GPL, à l'éthanol, associé à un système d'arrêt et de redémarrage automatique du moteur, ce redémarrage pouvant être effectué par le démarreur qui effectue également le premier démarrage.

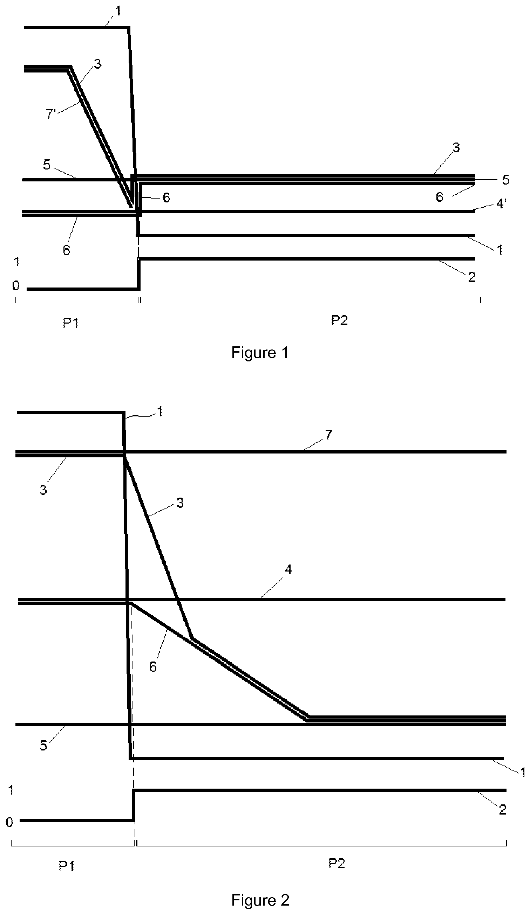

La figure 1 présente la stratégie de l'invention permettant de gérer une situation de dépassement de régime de ralenti moteur lors d'un redémarrage automatique du moteur thermique.

Sur la figure 1, la mise en route du moteur thermique comprend une phase P1 de mise en rotation assistée du moteur thermique par le système de démarrage, directement suivie d'une phase P2 de fonctionnement autonome du moteur thermique. Dans cette phase de vie il n'y a aucune demande de couple.

Sur la figure 1, la courbe 1 correspond à la consigne d'avance à l'allumage, la courbe 2 indique si l'avance à l'allumage est régulée en boucle ouverte (état 0) ou en boucle fermée (état 1). Le passage de la boucle ouverte à la boucle fermée est conditionné au régime moteur et en fonction de la température moteur.

Lors de la phase P1 de mise en rotation assistée du moteur thermique par le système de démarrage, l'avance à l'allumage est régulée en boucle ouverte. Une fois que l'on passe en boucle fermée (état 1), cela signifie que l'on est moteur tournant (Phase 2).

Sur la figure 1 encore, la courbe 3 présente l'évolution de l'avance à l'allumage effective, c'est-à-dire l'avance à l'allumage appliquée au moteur thermique. La courbe 4' représente un premier seuil prédéterminé d'avance à l'allumage tandis que la courbe 5 représente l'avance minimale de combustion, c'est-à-dire l'avance à l'allumage minimale en deçà de laquelle la combustion est considérée comme instable. Cette instabilité de combustion peut être définie par un critère et une valeur déterminé de ce critère. Le critère peut être par exemple un taux déterminé de cycle sans combustion.

Le premier seuil prédéterminé 4' d'avance à l'allumage représente le seuil minimum d'avance à l'allumage que l'on ne souhaite pas franchir à la baisse pendant la phase P1 de mise en rotation assistée du moteur thermique.

Dans cette situation de vie de redémarrage automatique, on peut prévoir une avance minimale de combustion 5 supérieure au premier seuil prédéterminé 4' ce qui permet de « casser » le surrégime. Par exemple, cette avance minimale de combustion peut être par exemple de -20 DV tandis que ce premier seuil prédéterminé 4' d'avance à l'allumage peut être par exemple de -36 DV.

La courbe 6 représente l'avance à l'allumage minimum effective. Au cours de la phase P1 de mise en rotation assistée du moteur thermique, l'avance à l'allumage effective 3, c'est-à-dire celle appliquée au moteur, est bornée par cette avance à l'allumage minimum effective 6. Au cours de la phase P1, l'allumage minimum effective 6 est défini comme correspondant au premier seuil prédéterminé 4' d'avance à l'allumage. Tout au cours de la phase P1 de mise en rotation assistée du moteur thermique, l'avance à l'allumage effective 3 suit une avance à l'allumage prédéterminé 7', ici constante jusqu'à ce que le moteur atteigne un régime de rotation prédéterminé puis suivant une pente pour se rapprocher de l'avance à l'allumage minimum effective 6.

Lors de la phase 2 de fonctionnement, l'avance à l'allumage effective 3 va avoir pour cible de prendre la consigne 1 d'avance à l'allumage, cependant elle sera limitée par l'allumage minimum effective 6. Par ailleurs, l'invention modifie la borne d'avance minimum effective 6 lors du passage de la phase P1 de mise en rotation assistée du moteur thermique à la phase P2 de fonctionnement autonome du moteur thermique en combustion.

Ainsi, lorsque débute la phase P2 de fonctionnement autonome cette avance à l'allumage minimum effective 6 évolue du premier seuil prédéterminé 4' vers l'avance minimale de combustion 5 et l'avance à l'allumage effective 3 converge vers la consigne d'avance à l'allumage limitée par l'avance à l'allumage minimum 6. Cette avance à l'allumage minimum effective 6 permet de gérer la transition de l'allumage effective 3, au passage de P1 à P2.

Afin d'avoir une bonne maîtrise du surrégime de ralenti et un bon suivi de la richesse, il est prévu que cette avance à l'allumage minimum effective 6 évolue directement du second seuil prédéterminé 4' vers l'avance minimale de combustion 5, dès l'entrée en phase 2 de fonctionnement. Cela permet de casser le surrégime de ralenti pour revenir au ralenti en quelques tours de moteur.

La figure 2 présente la stratégie de l'invention permettant de gérer une situation de dépassement de régime de ralenti moteur lors d'une mise en route du moteur thermique correspondant à un premier démarrage, ou démarrage initial, du moteur thermique, tel que déjà expliqué, par exemple par une intervention du conducteur à l'aide d'une clef de contact ou d'un bouton de démarrage.

Comme pour la figure 1, sur la figure 2, la phase P1 représente de mise en rotation assistée du moteur thermique par le système de redémarrage. Cette phase P1 est directement suivie de la phase P2 de fonctionnement autonome du moteur thermique.

Sur la figure 2, la courbe 1 correspond à la consigne d'avance à l'allumage, la courbe 2 indique si l'avance à l'allumage est régulée en boucle ouverte (état 0) ou en boucle fermée (état 1).

Lors de la phase P1 de mise en rotation assistée du moteur thermique par le système de démarrage, l'avance à l'allumage est régulée en boucle ouverte. Une fois que l'on passe en boucle fermée (état 1), cela signifie que l'on est moteur tournant (Phase 2).

Sur la figure 2 encore la courbe 3 présente l'évolution de l'avance à l'allumage effective, c'est-à-dire l'avance à l'allumage appliquée au moteur thermique. La courbe 4 représente un second seuil prédéterminé d'avance à l'allumage tandis que la courbe 5 représente l'avance minimale de combustion, c'est-à-dire l'avance à l'allumage minimale en deçà de laquelle la combustion est considérée comme instable.

Le second seuil prédéterminé 4 d'avance à l'allumage représente le seuil minimum d'avance à l'allumage que l'on ne souhaite pas franchir à la baisse pendant la phase P1 de mise en rotation assistée du moteur thermique au cours du premier démarrage.

Pour cette situation de vie de premier démarrage, on peut prévoir une avance minimale de combustion 5 inférieure au second seuil prédéterminé 4 ce qui permet de maîtriser le profil de surrégime et d'améliorer l'agrément. Ce second seuil minimum prédéterminé 4 est également différent et supérieur au premier seuil prédéterminé 4'. Par exemple, cette avance minimale de combustion peut être par exemple de -20 DV tandis que ce second seuil prédéterminé 4 d'avance à l'allumage peut être par exemple de 0 DV.

La courbe 6 représente l'avance à l'allumage minimum effective. Au cours de la phase P1 de mise en rotation assistée du moteur thermique, l'avance à l'allumage effective 3 est bornée par cette avance à l'allumage minimum effective 6 qui correspond au premier seuil prédéterminé 4 d'avance à l'allumage. Tout au cours de la phase P1 de mise en rotation assistée du moteur thermique, l'avance à l'allumage effective 3 suit une avance à l'allumage prédéterminé 7, ici constante et supérieure au premier seuil prédéterminé 4 d'avance à l'allumage.

Lors de la phase 2 de fonctionnement, l'avance à l'allumage effective va avoir pour cible de prendre la consigne d'avance à l'allumage, cependant elle sera limitée par l'allumage minimum effective 6. Par ailleurs, l'invention modifie la borne d'avance minimum effective 6 lors du passage de la phase P1 de mise en rotation assistée du moteur thermique à la phase P2 de fonctionnement autonome du moteur thermique en combustion.

Ainsi, lorsque débute la phase P2 de fonctionnement autonome cette avance à l'allumage minimum effective 6 évolue du second seuil prédéterminé 4 vers l'avance minimale de combustion 5 et l'avance à l'allumage effective 3 converge vers la consigne d'avance à l'allumage limitée par l'avance à l'allumage minimum 6.

Afin d'avoir une bonne maîtrise du surrégime de ralenti et un bon suivi de la richesse, il est prévu que cette avance à l'allumage minimum effective 6 évolue du second seuil prédéterminé 4 vers l'avance minimale de combustion 5 avec une pente calibrable. Cette avance à l'allumage minimum effective 6 permet de gérer la transition de l'avance à l'allumage effective 3.

Lors de la phase P2, l'avance à l'allumage 3 effective converge vers la consigne d'avance à l'allumage limitée par l'avance à l'allumage minimum effective 6 selon une pente initiale, tant que celle-ci n'a pas atteint l'avance à l'allumage minimum effective 6, cette pente initiale étant choisie de sorte que l'avance à l'allumage 3 effective atteigne l'avance à l'allumage minimum effective 6 lorsque cette dernière est comprise entre le second seuil prédéterminé 4 et l'avance minimale de combustion 5. On obtient ainsi une évolution de l'avance à l'allumage 3 effective en double pente.

La gestion du démarrage et du redémarrage du moteur thermique selon l'invention s'effectue au moyen d'un calculateur équipant le moteur thermique. Ce calculateur comprend les moyens d'acquisition, de traitement par instructions logicielles stockées dans une mémoire ainsi que les moyens de commande requis à mise en oeuvre du procédé de l'invention.

L'invention permet d'avoir une gestion des avances à l'allumage minimum différentes suivant le cas de vie premier démarrage et redémarrage automatique. Cela permet d'avoir un profil de surrégime spécifique à chacun de ces cas de vie. L'invention permet également de maîtriser les émissions au premier démarrage.

## Revendications

1. Procédé de contrôle d'un moteur thermique à allumage commandé de véhicule moteur comprenant un système d'arrêt et de redémarrage automatique dans lequel on applique une avance à l'allumage effective (3) au cours d'une mise en route du moteur thermique, cette mise en route comportant une phase (P1) de mise en rotation assistée du moteur thermique directement suivie d'une phase (P2) de fonctionnement autonome du moteur, dans lequel, lorsque la mise en route du moteur thermique est un redémarrage automatique, pendant la phase (P1) de mise en rotation assistée du moteur, l'avance à l'allumage effective (3) est bornée par une avance à l'allumage minimum (6) correspondant à un premier seuil prédéterminé (4'),
puis, lorsque débute la phase de fonctionnement autonome, cette avance à l'allumage minimum (6) évolue du premier seuil minimum prédéterminé (4') vers une avance minimale de combustion (5) en deçà de laquelle la combustion est considérée instable et l'avance à l'allumage effective (3) converge vers une consigne d'avance à l'allumage limitée par cette avance à l'allumage minimum (6),
**caractérisé en ce que** le premier seuil prédéterminé (4') est inférieur à l'avance minimale de combustion (5).

2. Procédé selon la revendication 1, **caractérisé en ce que** l'avance à l'allumage minimum (6) évolue directement du premier seuil minimum prédéterminé (4') vers l'avance minimale combustion (5), dès l'entrée de la phase (P2) de fonctionnement autonome.

3. Procédé selon l'une quelconque des revendications précédentes, **caractérisé en ce que** lorsque la mise en route est un démarrage initial du moteur thermique, pendant la phase (P1) de mise en rotation assistée du moteur, l'avance à l'allumage effective (3) est bornée par cette avance à l'allumage minimum (6) correspondant à un second seuil prédéterminé (4), différent du premier seuil prédéterminé (4'),
puis, lorsque débute la phase de fonctionnement autonome, cette avance à l'allumage minimum (6) évolue du second seuil minimum prédéterminé (4) vers l'avance minimale combustion (5), et l'avance à l'allumage effective (3) converge vers la consigne d'avance à l'allumage limitée par l'avance à l'allumage minimum (6).

4. Procédé selon la revendication 3, **caractérisé en ce que** l'avance à l'allumage minimum (6) évolue progressivement entre le premier seuil prédéterminé (4) et l'avance minimale de combustion (5) par une pente calibrable.

5. Procédé selon la revendication 3 ou la revendication 4, **caractérisé en ce que** lorsque débute la phase (P2) de fonctionnement autonome, l'avance à l'allumage effective (3) converge vers la consigne d'avance à l'allumage limitée par l'avance à l'allumage minimum (6) selon une pente initiale choisi de sorte que l'avance à l'allumage (3) effective atteigne l'avance à l'allumage minimum (6) lorsque cette dernière est comprise entre le premier seuil prédéterminé (4) et l'avance minimale de combustion (5) afin d'obtenir une évolution de l'avance à l'allumage (3) effective en double pente.

6. Procédé selon l'une quelconque des revendications 3 à 5, **caractérisé en ce que** l'avance minimale de combustion (5) est inférieure au second seuil prédéterminé (4).

7. Calculateur, **caractérisé en ce qu'**il comprend les moyens d'acquisition, de traitement par instructions logicielles stockées dans une mémoire ainsi que les moyens de commande requis à mise en œuvre d'un procédé selon l'une quelconque des revendications précédentes.

8. Moteur thermique à allumage commandé, **caractérisé en ce qu'**il comprend un calculateur selon la revendication précédente.

9. Véhicule automobile, **caractérisé en ce qu'**il comprend un moteur thermique à allumage commandé selon la revendication précédente pour son déplacement.

## Patentansprüche

1. Verfahren zum Steuern einer Wärmekraftmaschine mit Funkenzündung eines Kraftfahrzeugs mit einem automatischen Stopp- und Neustartsystem, bei dem während des Starts der Wärmekraftmaschine eine effektive Frühzündung (3) angewendet wird, wobei dieser Start eine Phase (P1) umfasst der unterstützten Rotation des Verbrennungsmotors, direkt gefolgt von einer Phase (P2) des autonomen Betriebs des Motors,
bei dem, wenn der Start des Verbrennungsmotors ein automatischer Neustart ist, während der Phase (P1) des unterstützten Drehens des Motors die wirksame Vorzündung (3) durch ein Vorzündungsminimum (6) begrenzt wird, das a entspricht erste vorgegebene Schwelle (4'),
dann, wenn die autonome Betriebsphase beginnt, entwickelt sich diese minimale Frühzündung (6) von der ersten vorbestimmten minimalen Schwelle (4') zu einer minimalen Frühzündung (5), unterhalb derer die Verbrennung als instabil betrachtet wird und die effektive Frühzündung (3) konvergiert auf einen durch diese minimale Frühzündung begrenzten Frühzündungssollwert (6),
**dadurch gekennzeichnet, dass** der erste vorgegebene Schwellenwert (4') kleiner als der minimale Verbrennungsvorlauf (5) ist.

2. Verfahren nach Anspruch 1, **dadurch gekennzeichnet, dass** der Mindestzündvorlauf (6) direkt von der ersten vorgegebenen Mindestschwelle (4') in Richtung des Mindestbrennvorlaufs (5) wechselt, sobald die Phase (P2) des autonomen Betriebs einsetzt.

3. Verfahren nach einem der vorangehenden Ansprüche, **dadurch gekennzeichnet, dass**, wenn der Start ein anfänglicher Start der Wärmekraftmaschine ist, während der Phase (P1) der unterstützten Rotation des Motors die effektive Frühzündung (3) ist begrenzt durch diese minimale Frühzündung (6), die einer zweiten vorbestimmten Schwelle (4) entspricht, die sich von der ersten vorbestimmten Schwelle (4') unterscheidet, dann, wenn die autonome Betriebsphase beginnt, entwickelt sich dieser minimale Frühzünder (6) von der zweiten vorbestimmten minimalen Schwelle (4) in Richtung des minimalen Frühzünders (5), und der effektive Frühzünder (3) konvergiert gegen den begrenzten Frühzünder-Sollwert um die minimale Frühzündung (6).

4. Verfahren nach Anspruch 3, **dadurch gekennzeichnet, dass** sich der Mindestzündvorlauf (6) zwischen der ersten vorbestimmten Schwelle (4) und dem Mindestverbrennungsvorlauf (5) um eine kalibrierbare Steigung progressiv entwickelt.

5. Verfahren nach Anspruch 3 oder Anspruch 4, **dadurch gekennzeichnet, daß** mit Beginn der Phase (P2) des autonomen Betriebs die Ist-Frühzündung (3) nach einer Anfangssteigung gegen den durch die Mindest-Frühzündung (6) begrenzten Frühzündungs-Sollwert konvergiert so gewählt, dass die effektive Frühzündung (3) die minimale Frühzündung (6) erreicht, wenn letztere zwischen dem ersten vorbestimmten Schwellenwert (4) und der minimalen Verbrennungsfrühverstellung (5) liegt, um eine Entwicklung der effektiven Frühzündung (3) mit doppelter Steigung.

6. Verfahren nach einem der Ansprüche 3 bis 5, **dadurch gekennzeichnet, dass** der minimale Verbrennungsvorlauf (5) kleiner ist als der zweite vorgegebene Schwellenwert (4).

7. Computer, **dadurch gekennzeichnet, dass** er die Mittel zum Erfassen und Verarbeiten von in einem Speicher gespeicherten Softwareanweisungen sowie die zum Ausführen eines Verfahrens nach einem der vorhergehenden Ansprüche erforderlichen Steuermittel umfasst.

8. Funkengezündete Wärmekraftmaschine, **dadurch gekennzeichnet, dass** sie einen Computer nach dem vorhergehenden Anspruch umfasst.

9. Kraftfahrzeug, **dadurch gekennzeichnet, dass** es für seine Bewegung eine Otto-Wärmekraftmaschine nach dem vorhergehenden Anspruch umfasst.

## Claims

1. Method for controlling a spark-ignition heat engine of a motor vehicle comprising an automatic stop and restart system in which an effective ignition advance (3) is applied during start-up of the heat engine, this start-up comprising a phase (P1) of assisted rotation of the thermal engine directly followed by a phase (P2) of autonomous operation of the engine, in which, when the start-up of the combustion engine is an automatic restart, during the phase (P1) of assisted rotation of the engine, the effective ignition advance (3) is limited by an ignition advance minimum (6) corresponding to a first predetermined threshold (4'), then, when the autonomous operating phase begins, this minimum ignition advance (6) evolves from the first predetermined minimum threshold (4') towards a minimum combustion advance (5) below which combustion is considered unstable and the effective ignition advance (3) converges towards an ignition advance setpoint limited by this minimum ignition advance (6),
**characterized in that** the first predetermined threshold (4') is less than the minimum combustion advance (5).

2. Method according to Claim 1, **characterized in that** the minimum ignition advance (6) changes directly from the first predetermined minimum threshold (4') towards the minimum combustion advance (5), as soon as the phase ( P2) autonomous operation.

3. Method according to any one of the preceding claims, **characterized in that** when the start-up is an initial start-up of the heat engine, during the phase (P1) of assisted rotation of the engine, the effective ignition advance (3) is limited by this minimum ignition advance (6) corresponding to a second predetermined threshold (4), different from the first predetermined threshold (4'),
then, when the autonomous operating phase begins, this minimum ignition advance (6) evolves from the second predetermined minimum threshold (4) towards the minimum combustion advance (5), and the effective ignition advance (3) converges towards the ignition advance setpoint limited by the minimum ignition advance (6).

4. Method according to Claim 3, **characterized in that** the minimum ignition advance (6) evolves progressively between the first predetermined threshold (4) and the minimum combustion advance (5) by a calibratable slope.

5. Method according to Claim 3 or Claim 4, **characterized in that** when the phase (P2) of autonomous operation begins, the actual ignition advance (3) converges towards the ignition advance setpoint limited by the minimum ignition advance (6) according to an initial slope chosen so that the effective ignition advance (3) reaches the minimum ignition advance (6) when the latter is between the first threshold predetermined (4) and the minimum combustion advance (5) in order to obtain an evolution of the effective ignition advance (3) with a double slope.

6. Method according to any one of Claims 3 to 5, **characterized in that** the minimum combustion advance (5) is less than the second predetermined threshold (4).

7. Computer, **characterized in that** it comprises the means of acquisition, of processing by software instructions stored in a memory as well as the control means required to implement a method according to any one of the preceding claims.

8. Spark-ignition heat engine, **characterized in that** it comprises a computer according to the preceding claim.

9. Motor vehicle, **characterized in that** it comprises a spark-ignition heat engine according to the preceding claim for its movement.
